# EUROPEAN PATENT APPLICATION

(11) **EP 2 746 589 A2**
(43) Date of publication of application: **25.06.2014**
(21) Application number: 13193835.9
(22) Date of filing: 21.11.2013
(51) Int. Cl.: F04D 29/02, F04D 29/22, F04D 29/28

(54) **Additively manufactured impeller**

(30) Priority: 18.12.2012 US 201213718237
(71) Applicant: Hamilton Sundstrand Corporation, Windsor Locks, CT 06096-1010 (US)
(72) Inventor: Hipsky, Harold W., Willington, CT Connecticut 06279 (US); Merritt, Brent J., Southwick, MA Massachusetts 01077 (US); Wentland, William Louis, Rockford, IL Illinois 61114 (US); Vedula, Venkata R., Unionville, CT Connecticut 06085 (US)
(74) Representative: Hull, James Edward

(57) **Abstract**

An impeller (40) including a blade section (52), a shroud section (46), and a hub (54) is made of a monolithic structure. The impeller (40) is made by loading a 3D image file into an additive manufacturing device, using it to generate 2D files which correspond to a plurality of cross-sectional layers of the impeller, and solidifying corresponding portions of pulverant material layers to create the impeller (40).

## Description

### BACKGROUND

This invention relates generally to the field of additive manufacturing. In particular, the present invention relates to articles made by additive manufacturing.

Additive manufacturing refers to a category of manufacturing methods characterized by the fact that the finished part is created by layerwise construction of a plurality of thin sheets of material. Additive manufacturing may involve applying liquid or powder material to a workstage, then doing some combination of sintering, curing, melting, and/or cutting to create a layer. The process is repeated up to several thousand times to construct the desired finished component or article.

Various types of additive manufacturing are known. For example, stereolithography (additively manufacturing objects from layers of a cured photosensitive liquid), Electron Beam Melting (using a pulverant material as feedstock and selectively melting the pulverant material using an electron beam), Laser Additive Manufacturing (using a pulverant material as a feedstock and selectively melting the pulverant material using a laser), and Laser Object Manufacturing (applying thin, solid sheets of material over a workstage and using a laser to cut away unwanted portions) are known.

Impellers are used in a variety of applications. Impellers are objects which redirect axial fluid flow into radial fluid flow. Impellers have traditionally been made in two portions: a hub with blades and/or airfoils which redirect the airflow; and a shroud which circumscribes the hub. These two portions are typically brazed to one another to form the finished impeller. The hub and shroud portions have traditionally been manufactured separately, then combined by brazing. Brazing often results in hazardous conditions during manufacturing, due to use of materials of concern, such as carcinogens.

### SUMMARY

According to one aspect of the present invention, an impeller includes a hub, blades, and a shroud, and is made from a monolithic material. An impeller may be made of a monolithic structure by generating a 3D image file corresponding to the desired impeller, and using it to generate a plurality of 2D image files. An additive manufacturing apparatus may use the 2D files to generate a corresponding series of sintered layers of pulverant material to form the impeller.

### BRIEF DESCRIPTION OF THE DRAWINGS

FIG. 1 is a perspective view of an additive manufacturing apparatus which may be used to generate an impeller.
FIG. 2 is a perspective view of an impeller made by additive manufacturing.
FIG. 3A is a cross-sectional view of a prior-art impeller.
FIG. 3B is a cross-sectional view of the impeller of FIG. 2.
FIG. 4 is a cross-sectional view of the impeller of FIG. 2 taken along line 4-4.

### DETAILED DESCRIPTION

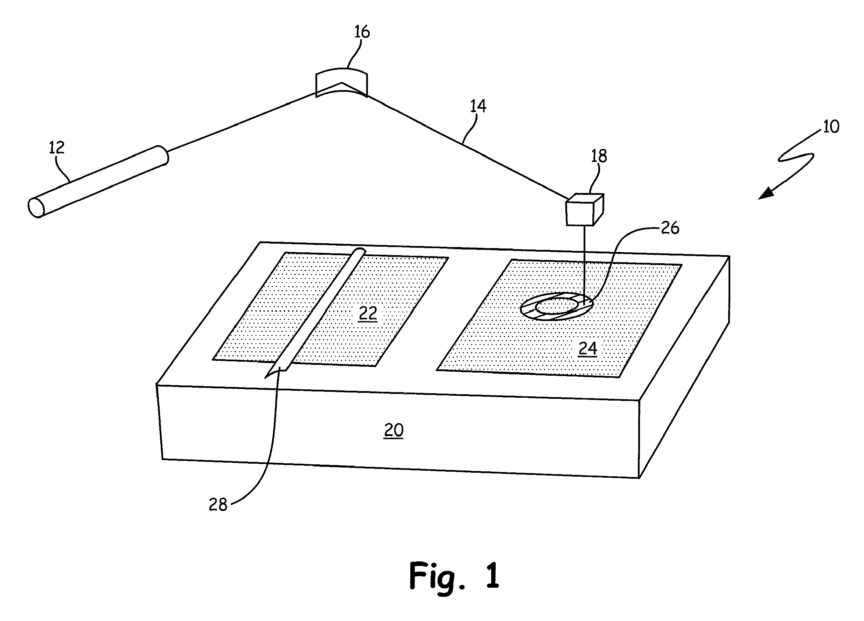

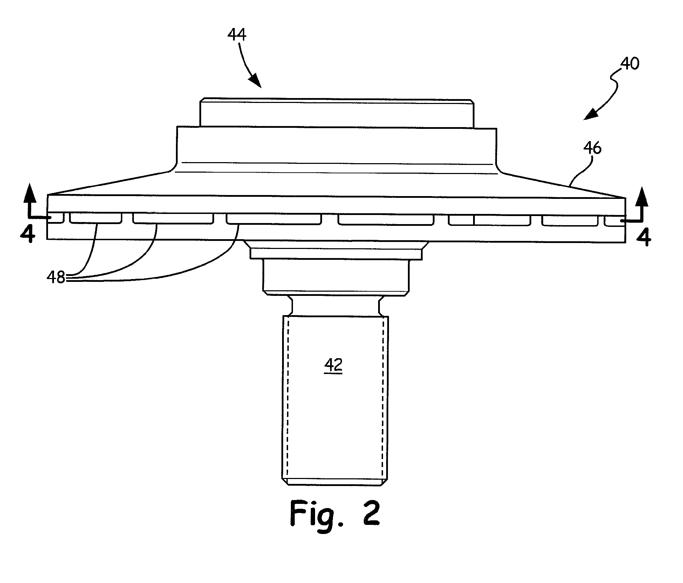

FIG. 1 is a perspective view of an additive manufacturing apparatus. In particular, FIG. 1 shows a direct metal laser sintering apparatus. Additive manufacturing system 10 includes radiation source 12, radiation beam 14, mirror 16, movable optical head 18, frame 20, pulverant material supply 22, pulverant material bed 24, sintered pulverant material 26, and spreader 28. Additive manufacturing system 10 may be used to create additively manufactured components, such as impellers. Many alternative designs of additive manufacturing devices are possible. Various additive manufacturing devices are commercially available. These devices perform additive manufacturing through processes known as selective laser sintering, direct metal laser sintering, stereolithography, laser-engineered net shaping, laminated object manufacturing, e-beam melting, and laser powder deposition, among others. FIG. 1 merely illustrates one potential additive manufacturing system for creating an additively manufactured impeller 40 (FIG. 2).

Radiation source 12 may be any source capable of creating focused radiation. For example, radiation source 12 may be a laser or an electron beam. Radiation beam 14 is a beam of focused or focusable radiation, such as a laser beam or an electron beam. Mirror 16 is present in some embodiments to deflect radiation in a desired direction. Movable optical head 18 is present in some embodiments, and also deflects radiation in a desired direction. For example, movable optical head 18 may include a mirror and be attached to an x-y positioning device. Frame 20 is used to contain pulverant material, in pulverant material supply 22 and in pulverant material bed 24. Pulverant material supply 22 and pulverant material bed 24 include pulverant material, such as granular or powdered metals, ceramics, or polymers. Pulverant material bed 24 further includes sintered pulverant material 26. Sintered pulverant material 26 is pulverant material contained within pulverant material bed 24 which has been at least partially sintered or melted. Spreader 28 is a spreading device which may transfer pulverant material from pulverant material supply 22 to pulverant material bed 24.

Radiation source 12 creates radiation beam 14 which can be used for melting, sintering, or cutting. Radiation source 12 is pointed towards mirror 16, which is arranged to deflect incident radiation toward moving optical head 18. Generally, radiation beam 14 will be targeted within frame 20, which holds pulverant material in pulverant material supply 22 and pulverant material bed 24. At least some of the pulverant material in pulverant material bed 24 is at least partially sintered or melted to form sintered pulverant material 26. Spreader 28 is positioned along frame 20 in order to move pulverant material between pulverant material supply 22 and pulverant material bed 24.

Radiation source 12 generates radiation beam 14. Radiation beam 14 travels to mirror 16, and is redirected by mirror 16 towards moving optical head 18. Moving optical head directs radiation beam 14 towards areas within pulverant material bed 24 in frame 20, which are melted or sintered. Sintered pulverant material 26 includes a layer of a desired additively manufactured component. Voids may be created in the desired component by not sintering or melting those portions of sintered pulverant material 26. After each layer of the desired additively manufactured component is finished, a support (not shown) lowers the height of pulverant material bed 24 with respect to frame 20. Likewise, a support (not shown) raises the height of pulverant material supply 22 with respect to frame. Spreader 28 transfers a layer of pulverant material from pulverant material supply 22 to pulverant material bed 24.

By repeating the process several times, a layer-by-layer object, such as impeller (FIGS. 2-4, 40) may be manufactured. Components manufactured in this manner may be made as a single, solid component, without braze joints, welds, or undesirable weaknesses created during traditional manufacturing.

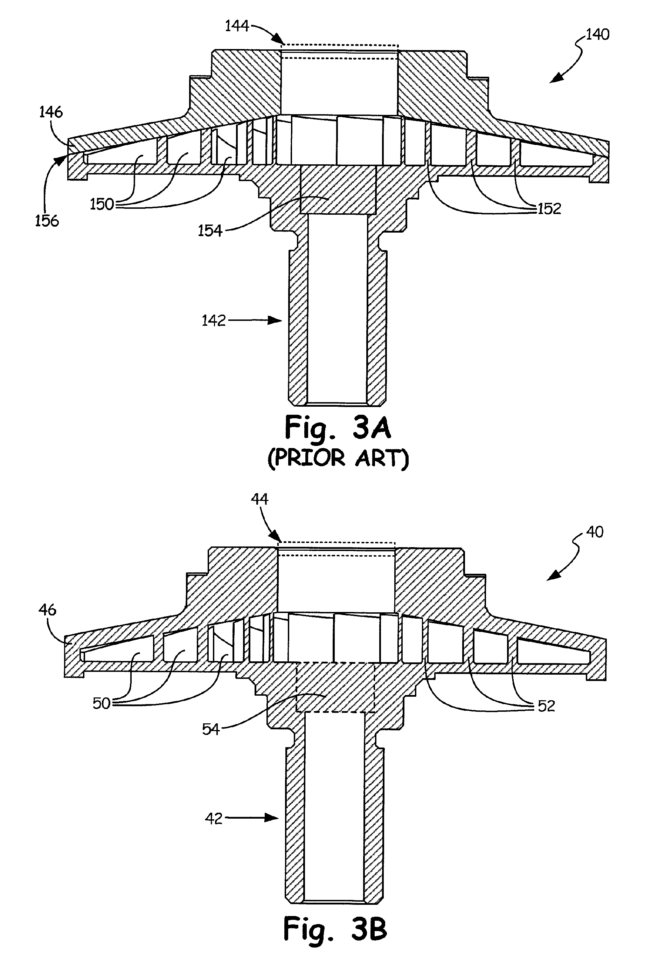

FIG. 2 is a perspective view of impeller 40. Impeller 40 includes shaft 42, inlet 44, shroud 46, and outlets 48. Impeller 40 is used to direct airflow from an axial direction to a radial direction. For example, impeller 40 may be used in aerospace application to create shorter gas turbine engines by replacing an axial compressor, or to provide pressurized air for auxiliary airplane functions. Shaft 42 is an object used to rotate impeller 40. As shown in FIG. 2, shaft 42 is a hollow bar with a primary length in the axial direction of impeller 40. Inlet 44 includes an aperture in impeller 40. Typically, inlet 44 is attachable to an adjacent component which generates or allows axial airflow towards impeller 40. For example, inlet 44 may include a grommet connected to impeller 40 and sealed to a plenum. Shroud 46 is an outer housing of impeller 40, which contains internal components such as internal passages 50 (FIG. 3) and impeller blades 52 (FIG. 3). Outlets 48 are arranged at a radially outward portion of impeller 40. Typically, outlets 48 generate pressurized air streams directed radially outward from impeller 40.

As shown in FIG. 2, shaft 42, inlet 44, shroud 46, and outlets 48 are a single, monolithic component. As shaft 42 is rotated, the rest of impeller 40 also rotates. Rotation of impeller 40 generates fluid to flow towards outlets 48 from inlet 44. Impeller 40 has been additively manufactured from a single material. The material may be any suitable material for an impeller, such as titanium, aluminum, or high-temperature superalloys. Many of the materials which may be additively manufactured to form impeller 40, such as titanium, aluminum, and some high-temperature superalloys, are unsuitable for brazing. Because of their stable surface oxides, these materials often cannot be brazed without applications of high levels of heat and/or surrounding the material with a reducing atmosphere during brazing. Thus, impeller 40 presents improvements in strength, weight, and/or durability over impellers made using traditional manufacturing.

FIG. 3A is a cross-sectional view of prior-art impeller 140. FIG. 3A shows similar parts to those described with respect to FIG. 2. For example, prior-art impeller 140 includes shaft 142, inlet 144, and shroud 146. In addition, FIG. 3A shows the interior structure of prior-art impeller 140, including internal passages 150, and impeller blades 152 attached to hub 154. Further, prior-art impeller 140 includes braze joint 156.

Braze joint 156 must be sufficiently strong to hold impeller blades 152 to shroud 146 during rapid rotation of prior-art impeller 140. Thus, only materials with good brazing characteristics, such as weak surface oxides, have been used for prior art impellers 140. For example, various grades of steel are often used. These materials tend to be heavy, and deteriorate more rapidly than other available non-brazable metals, such as titanium- and aluminum-based alloys.

FIG. 3B is a cross-sectional view of impeller 40. FIG. 3B includes many of the same parts as shown in FIG. 2, such as shaft 42, inlet 44, and shroud 46 of impeller 40. In addition, FIG. 3 shows internal passages 50, impeller blades 52, and hub 54. Internal passages 50 provide a flowpath for fluid passing from input 44 to outlets 48 (FIG. 2). Internal passages 50 have borders defined by shroud 46 and impeller blades 52. Impeller blades 52 at least partially fill the interior of shroud 46 and, during rotation, cause fluid to flow towards outlets 48 (FIG. 2).

Fluid at inlet 44 passes through the interior of shroud 46 and is contained within internal passages 50. As shaft 42 is rotated, the rest of impeller 40 rotates as well. Impeller blades 52 push fluid within impeller 40 radially outward. This causes pressure to drop at inlet 44, and causes pressure to rise at outlets (FIG. 2, 48). Hub 54 prevents fluid from continuing to flow in axially. Thus, fluid is expelled through outlets (FIG. 2, 48).

Notably, impeller 44 does not include a braze joint. Impeller 44 made by additive manufacturing may be made by any material so long as it is capable of being used in an additive manufacturing process. Thus, the drawbacks discussed with respect to prior-art impeller 144 (FIG. 3A) are obviated.

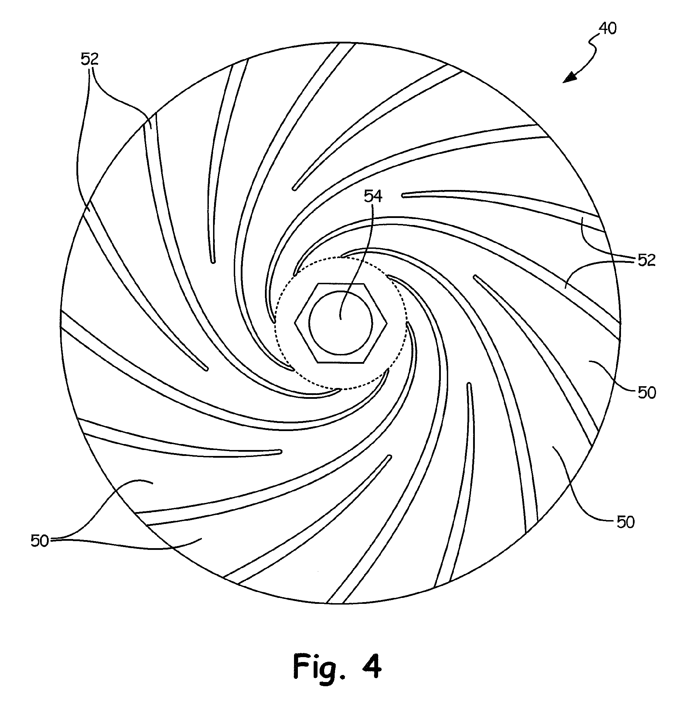

FIG. 4 is a cross-sectional view of impeller 40 taken along line 4-4 of FIG. 2. FIG. 4 shows a possible design of impeller blades and internal passages 50. FIG. 4 shows many of the same parts as described with respect to FIGS. 2 and 3B. In particular, FIG. 4 shows impeller 40, internal passages 50, impeller blades 52, and hub 54. As described with respect to FIGS 2-3, impeller 40 is a monolithic component built using additive manufacturing. Thus, impeller blades 52 and hub 54 are made of the same piece of material as shaft 40 (FIGS. 2, 3B) and shroud 46 (FIGS. 2, 3B). As impeller 40 rotates counterclockwise, impeller blades 52 cause fluid within internal passages 50 to flow radially outwards, away from hub 54. Fluid flow is contained from moving axially by shroud 46 (FIGS. 2, 3B).

Because impeller 40 is additively manufactured, at least two important advantages are realized. First, impellers made using traditional manufacturing could not be machined as a single piece. Thus, typically, the impeller would be made by machining the desired impeller blades, then machining the shroud, and combining the two pieces by brazing. Brazed impellers are inherently weaker and require additional steps and materials to create. Second, because the braze joint is eliminated, additively manufactured impellers may be created from materials which are not easily brazed. Typically, materials with stable surface oxides are difficult or impossible to braze. For example, brazing of titanium-based and aluminum-based alloys is often impracticable. Thus, traditional impellers are typically made from iron-based alloys such as steel. Additively manufacturing impeller 40 of titanium rather than steel, for example, is beneficial in that many titanium alloys are stronger and more lightweight than steels.

In one embodiment, the invention includes an impeller with a blade section including a plurality of blades, wherein the blade section has a diameter and the blades extend radially from a hub, and a shroud section circumscribing the blade section, connected to the radially outermost portions of the plurality of blades. The blade section, the shroud section, and the hub comprise a monolithic structure of a material. The diameter of the shroud section may be less than 20 cm., and the monolithic structure may extend less than 12 cm. axially. The impeller may be made of a material with a stable surface oxide, such as a titanium-based or an aluminum-based alloy. The impeller may also include a shaft connected to the monolithic structure, or the shaft may be a part of the monolithic structure.

In another embodiment of the invention, a method for making an impeller includes loading a 3D image file into an additive manufacturing device, generating 2D files from the 3D image file which correspond to a plurality of cross-sectional layers of the impeller, and solidifying a portion of a pulverant material layer corresponding to each of the plurality of cross-sectional layers in a layerwise fashion to create the impeller. The method may include using a material that has a stable surface oxide, such as a titanium-based or an aluminum-based alloy. The method may include solidifying the pulverant material by lasing, or by focusing an electron beam on the pulverant material. Solidifying the pulverant material may include at least partially melting the pulverant material, or sintering the pulverant material. The method may also include removing the unsintered portions of the pulverant material layers. The impeller formed by this method may include a shroud and a plurality of blades, and those parts may be made of a monolithic structure.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An impeller (40) comprising:
a blade section including a plurality of blades (52), wherein the blade section has a diameter and the blades (52) extend radially from a hub (54); and
a shroud section (46) circumscribing the blade section, connected to the radially outermost portions of the plurality of blades (52), wherein the blade section, the shroud section (46), and the hub (54) comprise a monolithic structure of a material.

2. The impeller (40) of claim 1, wherein the diameter of the shroud section (46) is less than 20 cm.

3. The impeller (40) of claim 1 or 2, wherein the monolithic structure extends less than 12 cm. axially.

4. The impeller (40) of any of claims 1 to 3, wherein the material has a stable surface oxide.

5. The impeller (40) of any preceding claim, wherein the material is a titanium-based alloy.

6. The impeller (40) of any preceding claim, further comprising a shaft (42) connected to the monolithic structure.

7. The impeller (40) of claim 6, wherein the monolithic structure includes the shaft (42).

8. A method of making an impeller (40), the method comprising:
loading a 3D image file into an additive manufacturing device;
generating 2D files from the 3D image file which correspond to a plurality of cross-sectional layers of the impeller (40); and
solidifying a portion of a pulverant material layer corresponding to each of the plurality of cross-sectional layers in a layerwise fashion to create the impeller (40).

9. The method of claim 8, wherein the pulverant material layer comprises a material having a stable surface oxide.

10. The method of claim 9, wherein the material having a stable surface oxide is a titanium-based alloy.

11. The method of any of claims 8 to 10, wherein solidifying the pulverant material layer includes lasing the pulverant material or focusing an electron beam on the pulverant material.

12. The method of any of claims 8 to 11, wherein solidifying the pulverant material layer includes at least partially melting the pulverant material.

13. The method of any of claims 8 to 12, wherein solidifying the pulverant material layer includes sintering the pulverant material.

14. The method of claim 13, and further comprising removing unsintered portions of the pulverant material layers.

15. The method of any of claims 8 to 14, wherein the impeller formed by solidifying the layers of the pulverant material includes a shroud (46) and a plurality of blades (52), and optionally the shroud (46) and the plurality of blades (52) are made of a monolithic structure.
